# EUROPEAN PATENT APPLICATION

(11) **EP 4 478 166 A1**
(43) Date of publication of application: **18.12.2024**
(21) Application number: 23918951.7
(22) Date of filing: 30.01.2023
(51) Int. Cl.: G06F 3/0481, G06F 3/0484

(54) **MULTI-SCREEN DISPLAY CONTROL METHOD, DISPLAY DEVICE AND STORAGE MEDIUM**

(71) Applicant: Guangzhou Shiyuan Electronic Technology Co., Ltd., Guangzhou, Guangdong 510535 (CN); Guangzhou Shiyuan Innovation Technology Co., Ltd., Guangzhou, Guangdong 510555 (CN)
(72) Inventor: WANG, Jiayu, Guangzhou, Guangdong 510535 (CN)
(74) Representative: Grünecker Patent- und Rechtsanwälte PartG mbB
(86) International application number: PCT/CN2023/073865
(87) International publication number: WO 2024/159361

(57) **Abstract**

According to the present disclosure, a method for controlling multi-screen display, display device, and storage medium are provided. The method is applied to a main display device. The main display device is connected to a secondary display device. The method comprises: displaying an application management interface, where the application management interface includes a window display area and a device display area, the window display area is used to display the application window that has already been executed in the main display device, and the device display area is used to display the respective display control of the main display device and the secondary display device, receiving a drag instruction applied to the window display area, where the drag instruction is used to drag a target application window in the window display area to an area where the display control of a device body is located in the device display area, where the device body is the main display device or the secondary display device, the target application window is an application window operated by the drag instruction, and displaying the target application window in the device body in response to the drag instruction. This technical solution of the present disclosure makes it more convenient to switch the application window between the main and secondary screens when the display device size is large.

## Description

### FIELD

The present disclosure relates to the field of multi-screen display technology, for example, to a method for controlling multi-screen display, display device, and storage medium.

### BACKGROUND

Multi-screen display technology can meet diverse display needs of users by connecting multiple display devices to an electronic device. The existing multi-screen display technology is usually used in operating systems such as ***Windows*** and ***macOS***, and external devices such as touch panels and mice may be used to control contents displayed on a secondary screen. In the prior art, when it is necessary to switch an application window between the main and secondary display devices, it is necessary to select an application window, and then drag the selected application window to the edge in the interface of the display device, thereby dragging the application window from the interface of one display device to the interface of another display device. However, when the display device size is large, the dragging distance is longer, resulting in inconvenient switching of the application window between the main and secondary screens.

### SUMMARY

In view of this, an embodiment of the present disclosure provides a method for controlling multi-screen display, display device, and storage medium, which can make the switching of application windows between main and secondary screens more convenient when the display device size is large.

According to an aspect of the present disclosure, a method for controlling multi-screen display is provided, and the method is applied to a main display device. The main display device is connected to a secondary display device. The method comprises: displaying an application management interface, where the application management interface includes a window display area and a device display area, the window display area is used to display the application window that has already been executed in the main display device, and the device display area is used to display the respective display control of the main display device and the secondary display device, receiving a drag instruction applied to the window display area, where the drag instruction is used to drag a target application window in the window display area to an area where the display control of a device body is located in the device display area, and the device body is the main display device or the secondary display device, the target application window is an application window operated by the drag instruction, and displaying the target application window in the device body in response to the drag instruction.

In an embodiment, the display control comprises a first control corresponding to the main display device and a second control corresponding to the secondary display device, the displaying the target application window in the device body in response to the drag instruction includes: when the target application window is dragged to the area where the first control is located, displaying the target application window in the main display device, and when the target application window is dragged to the area where the second control is located, displaying the target application window in the secondary display device.

In an embodiment, the method for controlling multi-screen display further includes: when receiving a trigger instruction for the application window within the window display area, displaying a close button on the application window; and after receiving a touch operation for the close button, closing the application window in the corresponding device body.

In an embodiment, the main display device displays a program identifier of an application installed in the main display device, and the method for controlling multi-screen display further includes: receiving a program drag instruction issued for any target program identifier, where the program drag instruction is used to drag the target program identifier into the display control of any device body in the device display area, and in response to the program drag instruction, starting the target application program corresponding to the target program identifier in the main display device, and displaying the application window of the target application program in the device body represented by the program drag instruction.

In an embodiment, after receiving a drag instruction applied to the window display area, the method for controlling multi-screen display further includes: when the target application window is in a top display state in the device body, setting the display control of the device body to a frozen state.

In an embodiment, the displaying the target application window in the device body in response to the drag instruction includes: when the target application window is in a non-top display state in the device body before receiving the drag instruction, displaying the target application window at the top in the device body in response to the drag instruction.

In an embodiment, the main display device displays a touch operation interface for manipulating the secondary display device. The method for controlling multi-screen display further includes: receiving a touch instruction issued on the touch operation interface, and adjusting the target application window displayed on the secondary display device in response to the touch instruction.

In an embodiment, the main display device displays a control system identifier corresponding to a control system for multi-screen display. The control system for multi-screen display is used to implement a method for controlling multi-screen display, and the displaying the application management interface comprises: providing a displayer setting interface after receiving a trigger operation on the control system identifier, where the displayer setting interface at least includes a screen-mode setting page for the secondary display device, and displaying the application management interface when at least one secondary display device is set to an extended mode.

According to another aspect of the present disclosure, a main display device is further provided. The main display device is connected with a secondary display device. The main display device comprises: an application-management-interface displaying unit, configured to display the application management interface, where the application management interface includes a window display area and a device display area, where the window display area is used to display the application window that has already been executed in the main display device, and the device display area is used to display a respective display control of the main display device and the secondary display device, a drag-instruction receiving unit, configured to receive a drag instruction applied to the window display area, where the drag instruction is used to drag a target application window in the window display area to the area where the display control of the device body is located in the device display area, and the device body is the main display device or the secondary display device, the target application window is an application window operated by the drag instruction, and an application-window displaying unit, configured to display the target application window in the device body in response to the drag instruction.

According to another aspect of the present disclosure, a display device is further provided. The display device comprises a processor and a memory for storing a computer program. When the computer program is executed by the processor, the method for controlling multi-screen display as described above is implemented.

According to another aspect of the present disclosure, a computer-readable storage medium for storing computer programs is further provided. When the computer program is executed by a processor, the method for controlling multi-screen display as described above is implemented.

By providing an application management interface on the main display device, which is used to display the window display area of the application window that has already been executed in the main display device and the device display area for displaying the respective display controls of the main display device and the secondary display device, after receiving a drag instruction for the target application window in the window display area from a user, the target application window is displayed on the corresponding device body, this can achieve the switching of the target application window between the main display device and the secondary display device, making it more convenient to switch the application window between the main and secondary screens when the display device size is large.

### BRIEF DESCRIPTION OF THE DRAWINGS

By referring to the accompanying drawings, the features and advantages of the present disclosure can be more clearly understood. The drawings are illustrative and should not be understood as any limitation on the present disclosure. In the drawings:
Fig. 1 is a schematic diagram of a control system for initiating multi-screen display in a main display device according to an embodiment of the present disclosure.
Fig. 2 is a schematic diagram in a case where a secondary display device is not connected according to an embodiment of the present disclosure.
Fig. 3 is a schematic diagram of a setting interface for a secondary display device according to an embodiment of the present disclosure.
Fig. 4 is a schematic diagram of an application management interface according to an embodiment of the present disclosure.
Fig. 5 is a schematic diagram of an application management interface when the secondary display device is set to a screen duplicating mode according to an embodiment of the present disclosure.
Fig. 6 is an interaction diagram of a scene example of a method for controlling multi-screen display according to an embodiment of the present disclosure.
Fig. 7 is a schematic diagram of an application management interface in which all application windows executed on the main display device are closed according to an embodiment of the present disclosure.
Fig. 8 is a schematic diagram of steps of a method for controlling multi-screen display according to an embodiment of the present disclosure.
Fig. 9 is a schematic diagram of a closed application window according to an embodiment of the present disclosure.
Fig. 10 is a schematic diagram of a control device for multi-screen display according to an embodiment of the present disclosure.
Fig. 11 is a schematic diagram of a structure of a display device according to an embodiment of the present disclosure.

### DESCRIPTION OF THE PREFERRED EMBODIMENTS

In order to clarify the purpose, technical solution, and advantages of the embodiments of the present disclosure, the following will provide a clear and complete description of the technical solutions in the embodiments of the present disclosure in conjunction with the accompanying drawings. Obviously, the described embodiments are a part of the embodiments of the present disclosure, not all thereof. Based on the embodiments in the present disclosure, all other embodiments obtained by those skilled in the art without creative labor fall within the scope of protection of the present disclosure.

Multi-screen display technology can meet the diverse display needs of users by connecting multiple external display devices to an electronic device. In the prior art, when a main display device is a touch screen, for the main display device connecting with at least one external secondary display device, it is necessary to drag the target application window to the edge of the display device to switch the device body displayed by the target application window. However, in a case where the size of the touch device is large, when dragging the application window directly on the touch screen, it is necessary for the user to walk a longer distance. If there are two secondary display devices connected to the main display device, which are numbered as 01, 02, and 03, when move the application window from Device 01 to Device 03, the application window may need to be moved to Device 02 first, and then to Device 03. Especially when there is a certain distance between multiple display devices, the user dragging the display window to Device 03 may require moving to the location of Device 02, which requires a longer time. Of course, when Device 02 does not have touch function, the application window cannot be dragged to Device 03. In this case, dragging the application window between the main and secondary display devices takes a long time and the dragging operation is not convenient enough. Even when dragging through external operating devices such as a mouse, if the display device size is large, the dragging distance is longer, resulting in inconvenient switching of the application window between the main and secondary screens. Therefore, by providing an application management interface in the main display device that may be used to control the switching of application windows among multiple display devices, it is possible to avoid the need for long-distance dragging of application windows in a case where the display device size is large, thereby providing convenience for the switching of application windows among multiple display devices.

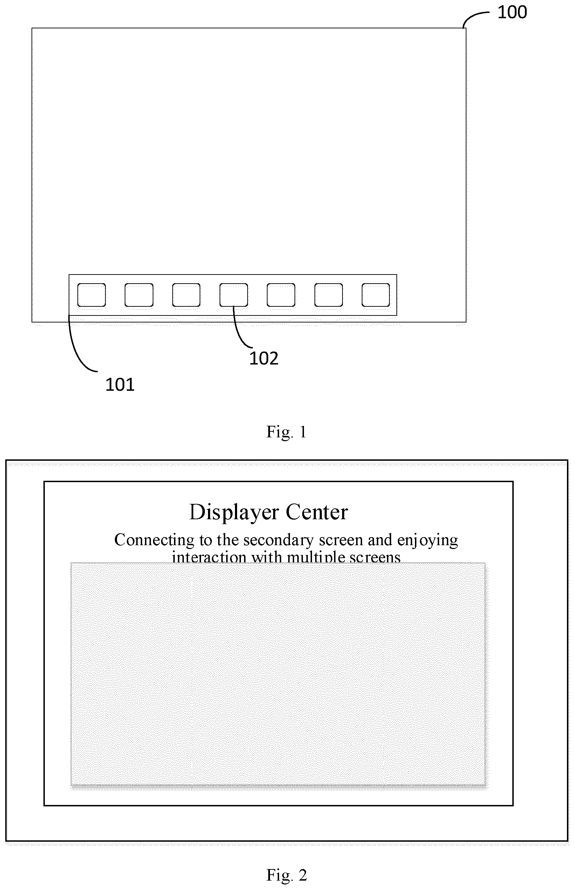

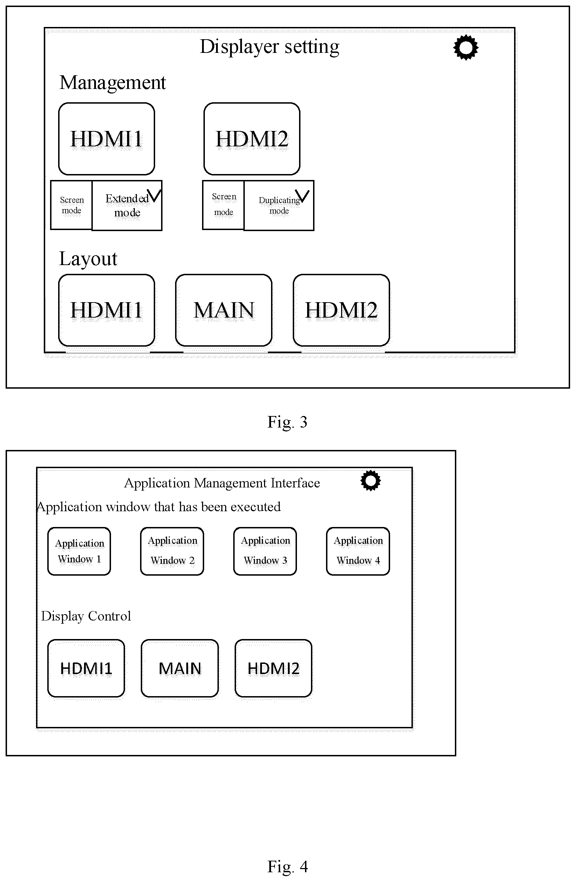

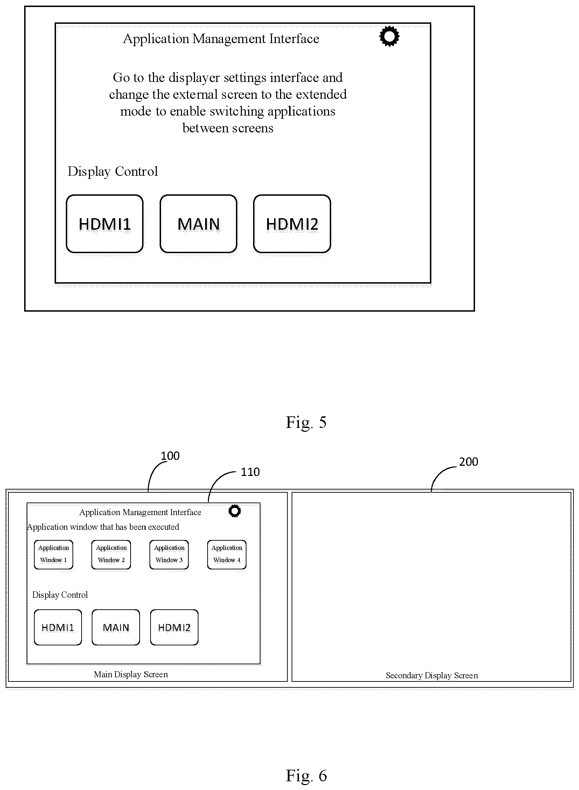

According to an embodiment of this description, a scene example of a control system for multi-screen display is provided. The control system for multi-screen display includes a main display device 100 and a secondary display device 200. The main display device 100 displays an application management interface 110. Referring to Fig. 1, firstly, a user may trigger a control system switch 102 for multi-screen display in a menu bar 101 on the main display device. After receiving a trigger operation of the user on the control system switch for multi-screen display, in a case where the secondary display device is not connected, the user is prompted to connect the secondary display device to the main display device (as shown in Fig. 2). When the secondary display device is connected, the displayer setting interface (as shown in Fig. 3) may be entered. Fig. 3 is a displayer setting interface when there are two external secondary display devices, one of which is set to an extended mode; the other of which is in a duplicating mode, and its displayed content is consistent with that of the main display device. Of course, the displayer setting interface further includes the layout of secondary display devices. In Fig. 3, a display control of Display Screen ***HDMI1*** on the management interface may be moved to the left of the main display device on a layout page below, and a display control of Display Screen ***HDMI2*** may be moved to the right of the main display device on the layout page below, so as to achieve the secondary display device surrounding the main display device. It should be noted that the embodiment of this description does not limit the layout of each display device. Then, after setting the displayer setting interface, a return button is clicked so as to return the application management interface shown in Fig. 4. If both Secondary Display Devices ***HDMI*** and ***HDMI2*** are set to a screen duplicating mode, the display content of the application management interface is shown in Fig. 5.

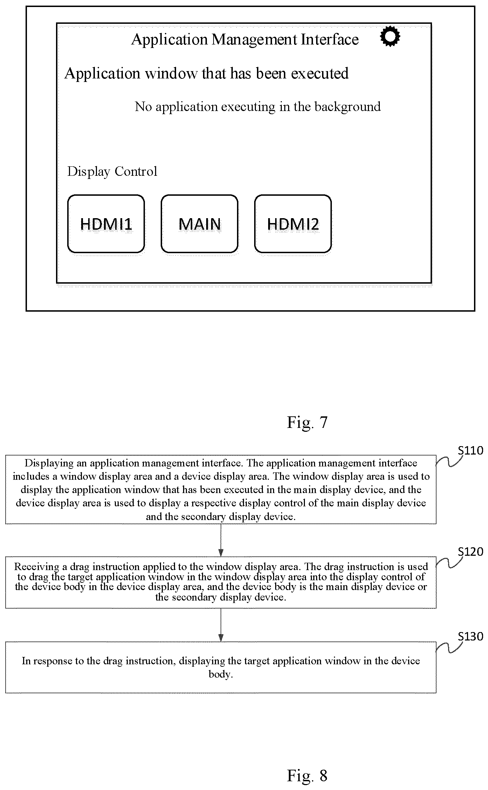

Referring to Fig. 6, the application management interface 110 is displayed on the main display device 100. The application management interface 110 displays multiple application windows executed on the main display device and display controls corresponding to each display screen. Due to the fact that the screen corresponding to Interface ***HDMI2*** is set as an extended screen, the displayed content is consistent with that displayed on the main display device 100. Therefore, the display controls corresponding to ***HDMI2*** may be set to a frozen state, which will not be repeated herein. Interface ***HDMI1*** is set to the extended mode, and when the user drags Application Window 1 to the area of the display control of ***HDMI1*,** Application Window 1 may be displayed in the secondary display device 200. When the user drags Application Window 2 to the area of Main Display Control ***MAIN***, Application Window 2 may be displayed on the main display device 200. When all application windows executed on the main display device are closed, the application management interface is shown in Fig. 7.

The above is only a scene example according to the embodiment of this description, which is not intended to limit the present disclosure. Any modifications, equivalent substitutions, etc. made within the spirit and principles of the present disclosure should be included within the scope of protection of the present disclosure.

According to the embodiment of the present disclosure, a control system for multi-screen display is provided. The control system for screen display may include a main display device and a secondary display device. The main display device may be a desktop computer, tablet computer, intelligent interactive tablet, laptop computer, smartphone, digital assistant, smart wearable device, shopping guide terminal, TV, and other devices including touch display screens. The secondary display device may be a display screen with touch function or without touch function, and the secondary display device may be connected to the main display device through wired means. Of course, the secondary display device may also be connected to the main display device through a built-in communication module. The communication module may be wireless communication or wired communication. The wireless communication may use Bluetooth, WI-FI, 2.4GHz, etc. The wired communication may use USB, serial port, network cable, Interface ***HDMI***, etc. Alternatively, with the development of science and technology, the communication module may also be a new technological means that can achieve the corresponding functions of the embodiment of the description. For example, it may be a new form of communication module based on quantum communication implementation.

Referring to Fig. 8, which is a method for controlling multi-screen display according to an embodiment of the present application, the control method is applied to the main display device, the main display device is connected to the secondary display device. This method may include multiple steps as follows.

S110: displaying an application management interface. The application management interface includes a window display area and a device display area. The window display area is used to display the application window that has been executed in the main display device, and the device display area is used to display a respective display control of the main display device and the secondary display device.

In some cases, a display device cannot display multiple display pages simultaneously. Therefore, multiple target application windows may be displayed simultaneously by connecting one or more external display devices. In the prior art, when the main display device is a touch screen, for a main display device with at least one external secondary display device, it is necessary to drag the target application window to the edge of the display device to switch the device body displayed by the target application window. However, in cases where the size of the touch device is large, when dragging the application window directly on the touch screen, it is necessary for the user to walk a longer distance. If there are two secondary display devices connected to the main display device, which are numbered as 01, 02, and 03, when move the application window from Device 01 to Device 03, the application window may need to be moved to Device 02 first, and then to Device 03. Especially when there is a certain distance between multiple display devices, the user dragging the display window to Device 03 may require moving to the location of Device 02, which requires a longer time. Of course, when Device 02 does not have touch function, the application window cannot be dragged to Device 03. In this case, dragging the application window between the main and secondary display devices takes a long time and the dragging operation is not convenient enough. Even when dragging through external operating devices such as a mouse, if the display device size is large, the dragging distance is longer, resulting in inconvenient switching of the application window between the main and secondary screens. Therefore, an application management interface may be set up on the main display device to control the secondary display device.

In this embodiment, the main display device may be a display device with a processor, on which multiple applications are installed, and each application corresponds to one or more application windows. The secondary display device may be a displayer, which does not need to carry a processor. For example, the main display device is a touchscreen device that has video playback software, ***Word***, ***Power Point***, and other software installed thereon. Video playback software may play Videos A, B, and C, ***Word*** may open Documents A, B, and C, ***Power Point*** may open PPT A, B, and C.

In this embodiment, the window display area may display ***logo*** of an application window executed on the main display device, or it may be a preview image of the content represented by the application window executed on the main display device. For example, the window display area may display the application ***logo*** of a playback software for Video A, or it may display a frame image in Video A as the application window identifier for that application window.

In this embodiment, the display control may be a control for identifying a display device, and the display control may be a thumbnail of the current display screen of the corresponding display device. The displayed content may also change with the change of the display screen of the corresponding display device. The display control may also be a fixed style that represents the corresponding display device.

S 120: Receiving a drag instruction applied to the window display area. The drag instruction is used to drag the target application window in the window display area to the area where the display control of the device body is located in the device display area, and the device body is the main display device or the secondary display device. The target application window is an application window operated the drag instruction.

In this embodiment, it is necessary to determine on which display device the target application is displayed. Therefore, by generating corresponding drag instructions through operations on the application management interface of the user, it is judged whether the drag instruction is used to drag a target application window to the main display device for display or to display it on the secondary display device.

In this embodiment, if the user drags the target application window of the window display area to the area where the display control of the secondary display device is located, the target application window is displayed on the secondary display device. If the target application window is already displayed on the secondary display device, the display layer of the target application window may be adjusted to the top-level display of the secondary display device. If the user drags the target application window of the window display area to the area where the display control of the main display device is located, the target application window is displayed on the main display device. If the target application window is already displayed on the main display device, the display layer of the application window may be adjusted to the top-level display of the main display device. It should be noted that the target application window does not necessarily need to be completely dragged into the area where the display control is located in order to display the target application window in the corresponding device body of the display control. Dragging a local area of the target application window or completely into the area where the display control is located may achieve display in the corresponding device body of the display control. The local area may be determined based on the area ratio of the target application window, or a coordinate point may be determined within the target application window, simply by dragging the coordinate point into the device body.

S130: displaying the target application window in the device body in response to the drag instruction.

In this embodiment, in order to display the application window on a specified display device, it is necessary to establish an association between the display device and the target application window. For example, in the case where the operating system used by the main display device is ***Android*** system, the device ID of the main display device is 01, and the device ID of the secondary display device is 02. Each application window also has a unique application window identifier. If the target application window is displayed on the main display device, and the drag instruction is to drag the target application window to the area where the display control of the secondary display device is located, it is necessary to disconnect the connection relationship between the application window identifier and the device ID of the main display device, and establish the connection relationship between the target application window and the device ID of the secondary display device. This is, through ***moveTaskFront*** Interface which is an interface provided by native ***Android***, the ID of the display device is specified as 02 and the identifier of the target application window is specified, so that the target application window may be displayed on the secondary display device.

In an embodiment, the display control includes a first control corresponding to the main display device and a second control corresponding to the secondary display device. The displaying the target application window in the device body in response to the drag instruction may include: when the target application window is dragged to the area where the first control is located, displaying the target application window in the main display device, when the target application window is dragged to the area where the second control is located, displaying the target application window in the secondary display device.

In this embodiment, there are controls corresponding to each display screen provided on the application management interface. The main display device correspondingly has a first control on the application management interface, and the secondary display device correspondingly has a second control on the application management interface. When the user drags the target application window in the window display area to the area where the first control is located, the target application window may be displayed at the top level of the main display device. When the user drags the target application window in the window display area to the area where the second control is located, the target application window may be displayed at the top level of the secondary display device. If the current target application window is displayed on the secondary display device, when the user drags the target application executed on the main display device to the area where the first control is located, the target application window may be moved from the secondary display device to the upper layer of the main display device for display. If the current target application window is displayed on the main display device, when the user drags the target application window in the window display area to the area where the second control is located, the target application window may be moved from the main display device to the upper layer of the secondary display device for display. It should be noted that in the embodiment of the description, the number of display controls is not displayed. When there are multiple secondary display devices, the corresponding number of display controls are also provided in the device display area of the application management interface. That is, the number of display controls is the sum of the number of main and secondary display devices, and each display control has a corresponding device body.

In an embodiment, the method for controlling multi-screen display may further include: displaying a close button on the application window when receiving a trigger instruction for the application window within the window display area; and after receiving a touch operation for the close button, closing the application window in the corresponding device body.

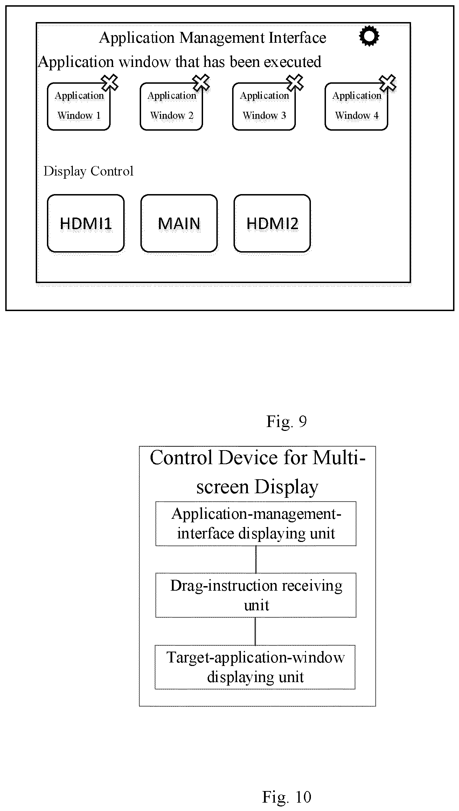

Referring to Fig. 9, in this embodiment, after a certain application window is displayed, it needs to be closed. In the prior art, if the secondary display device does not support touch screen operation, the target application window displayed on the secondary display device cannot be closed without connecting to an external operating device. Therefore, an operation interface for closing the target application window may be provided on the application management interface of the main display device. For example, through ***removeTask*** Interface which is an interface provided by native ***Android***, the application window identifier corresponding to the target application window is specified to close the application window.

In an embodiment, the main display device displays a program identifier for an application installed in the main display device, and the method for controlling multi-screen display may further include: receiving a program drag instruction for any target program identifier, where the program drag instruction is used to drag the target program identifier into a display control of any device body in the device display area; in response to the program drag instruction, starting the target application program corresponding to the target program identifier in the main display device, and displaying the application window of the target application program in the device body represented by the program drag instruction.

In this embodiment, when the user drags the program identifier of the application installed in the main display device to the area where the first control is located, the target application window corresponding to the application may be displayed in the main display device. When the user drags the program identifier of the application installed in the main display device to the area where the second control is located, the corresponding target application window of the application may be displayed in the secondary display device. Of course, the user may also activate the first control by triggering the first control. In this case, the user clicking on the application identifier of the application installed on the main display device will cause the corresponding application window of the application to be displayed on the main display device. At this point, through ***startActivity*** Interface which is an interface provided by native ***Android***, the display device is specified as the main display device, indicating that the program is started on the main display device. At the same time, the target application window is displayed in the window display area of the application management interface. When the user need to adjust the display screen of the target application window, corresponding drag operations are performed thereon.

In an embodiment, after receiving a drag instruction applied to the window display area, the method for controlling multi-screen display may further include: when the target application window is in a top display state in the device body, setting the display control of the device body to a frozen state.

In this embodiment, if the target application window is located at the top level in the current device body, it does not need to be adjusted within the current device body. Therefore, the control corresponding to the current device body may be set to the frozen state, which can remind the user that the target application window does not need to be adjusted in the current device body. For example, when the target application window is in the top display state on the main display device, if the target application window is still moved to the area where the display control of the main display device is located, the target application window is still in the top display on the main display device. This operation is meaningless. When dragging the target application window, the display control of the main display device may be set to a frozen state, that is, the first control may be grayscale represented.

In an embodiment, the displaying the target application window in the device body in response to the drag instruction may include: when the target application window is in a non-top display state in the device body before receiving the drag instruction, displaying the target application window at the top in the device body in response to the drag instruction.

In this embodiment, when the target application window is covered by other application windows in the device body, the target application window in the window display area may be dragged to the area where the corresponding display control of the device body is located in the device display area, and the target application window may be adjusted to the top level of the device body for display. For example, if the target application window is not displayed at the top in the main display device and needs to be displayed at the top, the target application window in the window display area may be moved to the area where the first control is located, and the target application window may be moved to the top level in the main display device for display.

In an embodiment, the main display device displays a touch operation interface for manipulating the secondary display device. The method for controlling multi-screen display may further includes receiving touch instructions issued on the touch operation interface, and adjusting the target application window displayed on the secondary display device in response to the touch instructions.

In some cases, the user may want to move or adjust the size of the application window displayed on the secondary display device. Therefore, a virtual touchpad may be set up in the main display device to adjust the layout of the application examples displayed on the secondary display device, or to adjust the display layers of multiple target display windows displayed on the secondary display device.

In this embodiment, if the first display device is a touch screen device, ***input*** Interface which is an interface provided by native ***Android*** may be used to input analog touch data. Simulation operations may be ***motionevent**<**DOWN***|***UP***|***MOVE***|***CANCEL**><**x**><**y**>*, which is equivalent to the touch control board of a laptop. ***motionevent**<**DOWN**><**x**><**y**>* represents a position of the currently displayed application instance on the secondary display device when clicking on the touchpad. ***motionevent**<**UP**><**x**><**y***> indicates the position of the currently displayed application instance on the secondary display device when the click operation on the touchpad is completed. ***motionevent**<**MOVE**><**x**><**y***> represents the displacement of the currently displayed application instance on the secondary display device. ***motionevent**<**CANCEL**><**x**><**y***> indicates the cancellation of the move operation and the restoration of the application instance currently displayed on the secondary display device to its original position.

In this embodiment, a virtual cursor may also be set on the secondary display device. During the touch operation interface used for the secondary display device on the main display device, the cursor of the secondary display device may also move accordingly. For example, moving with a single finger on the touch operation interface may move the cursor on the secondary display device, single click with a single finger on the touch operation interface may perform a single click at the position of the cursor on the secondary display device, double click with a single finger on the touch operation interface may performed double click at the position of the cursor on the secondary display device, double finger sliding may perform movement operation of the application instance where the cursor is located on the secondary display device. The embodiment of this description does not limit the form of cursor display, which may be a virtual arrow or highlight the current sliding position.

In an embodiment, the main display device displays control system identifier corresponding to a control system for multi-screen display. The control system for multi-screen display is used to implement a control method for multi-screen display, and the displaying the application management interface may include: providing a displayer setting interface after receiving a trigger operation on the control system identifier; where the displayer setting interface at least includes a screen-mode setting page for the secondary display device, and displaying the application management interface when at least one secondary display device is set to an extended mode.

Referring to Fig. 3, in this embodiment, before displaying the steps of the application management interface, in the case of a secondary display device connected to the main display device, if all the secondary display devices connected to the main display device are set to the duplicating mode by the user, the pages displayed by each secondary display device are consistent with those displayed by the main display device, that is, adjustment of the displayed content in the main and secondary display devices cannot be achieved. If at least one secondary display device is set to the extended mode, such a content is displayed that if there is a secondary display device connected to the main display device, the corresponding application management interface is loaded in the main display device. It should be noted that there is no restriction on the number of secondary display devices set in the extended mode and the number of secondary display devices set in the duplicating mode in this embodiment. When there are multiple secondary display devices set to the extended mode, the corresponding number of display controls should also be loaded on the application management interface. At the same time, during the display of the application management interface, the settings control on the application management interface may also be triggered to enter the displayer setting interface, which may adjust the screen mode of each secondary display device. After the adjustment is completed, at least one secondary display device may be set to the extended mode before returning to the application management interface.

Referring to Fig. 10, according to an embodiment of the present application, a main display device is further provided. The main display device may include: an application-management-interface displaying unit, a drag-instruction receiving unit, and an application-window displaying unit.

The application-management-interface displaying unit is configured to display an application management interface. The application management interface includes a window display area and a device display area, the window display area is used to display the application window that has been executed in the main display device, and the device display area is used to display the respective display control of the main display device and the secondary display device.

The drag-instruction receiving unit is configured to receive a drag instruction applied to the window display area, where the drag instruction is used to drag a target application window in the window display area to an area where the display control of a device body is located in the device display area, and the device body is the main display device or the secondary display device, the target application window is an application window operated by the drag instruction.

The application-window displaying unit is configured to display the target application window in the device body in response to the drag instruction.

In an embodiment, the display control comprises a first control corresponding to the main display device and a second control corresponding to the secondary display device, the application-window displaying unit may include: a first window displaying unit and a second window displaying unit. The first window displaying unit is configured to when the target application window is dragged to the area where the first control is located, display the target application window in the main display device, and the second window displaying unit is configured to when the target application window is dragged to the area where the second control is located, display the target application window in the secondary display device.

In an embodiment, the main display device may further include: a close-button displaying unit, and a target-application-window closing unit. The close-button displaying unit is configured to when receiving a trigger instruction for the application window within the window display area, display a close button on the application window; and the target application window closing unit is configured to after receiving a touch operation for the close button, close the application window in the corresponding device body.

In an embodiment, the main display device may further include: a triggering-instruction receiving unit, and an application-window displaying unit. The triggering-instruction receiving unit is configured to receive a program drag instruction issued for any target program identifier, and the program drag instruction is used to drag the target program identifier into the display control of any device body in the device display area; in response to the program drag instruction, start the target application program corresponding to the target program identifier in the main display device, and display the application window of the target application program in the device body represented by the program drag instruction.

In an embodiment, after receiving a drag instruction applied to the window display area, the main display device may further include a control-state adjusting unit, configured to when the target application window is in a top display state in the device body, set the display control of the device body to a frozen state.

In an embodiment, the application-window displaying unit may include: an application-window-layer adjusting unit, configured to when the target application window is in a non-top display state in the device body before receiving the drag instruction, display the target application window at the top of the device body in response to the drag instruction.

In an embodiment, the main display device displays a touch operation interface for manipulating the secondary display device. The main display device may further include a window adjusting unit, configured to receive a touch instruction issued on the touch operation interface, and adjust the target application window displayed on the secondary display device in response to the touch instruction.

In an embodiment, the main display device displays a control system identifier corresponding to a control system for multi-screen display. The control system for multi-screen display is used to implement a method for controlling multi-screen display, and the application-management-interface displaying unit may include: a display-setting-page providing unit, configured to provide a displayer setting interface after receiving a trigger operation on the control system identifier, where the displayer setting interface at least includes a screen-mode setting page for the secondary display device, and the application-management-interface displaying unit is configured to display the application management interface when at least one secondary display device is set to extended mode.

The specific functions and effects implemented by the main display device may be compared and explained with other embodiments in this description, and will not be repeated here. The various modules in the main display device may be fully or partially implemented through software, hardware, and their combinations. The various modules may be embedded in hardware or independent of the processor in the computer device, or stored in software form in the memory of the computer device, for the processor to call and execute the operations corresponding to the above modules.

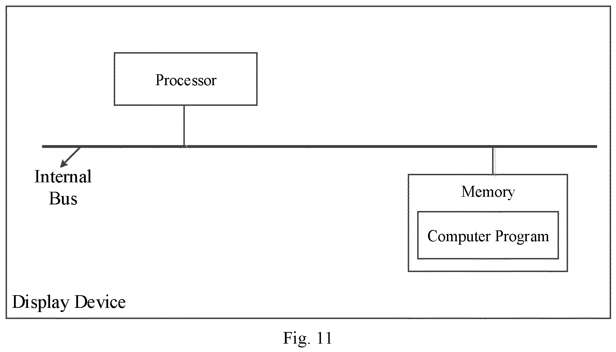

Referring to Fig. 11, according to an embodiment of the present disclosure, a display device is further provided. The display device includes a processor and a memory, the memory is configured to store a computer program, and when the computer program is executed by the processor, the method for controlling multi-screen display described above is realized.

The processor may be a central processing unit (CPU). The processor may also be other general-purpose processor, digital signal processor (DSP), application specific integrated circuit (ASIC), field programmable gate array (FPGA) or other programmable logic devices, discrete gate or transistor logic devices, discrete hardware components and other chips, or combinations of the above types of chips.

As a non-transitory computer readable storage medium, the memory may be configured to store non-transitory software programs, non-transitory computer executable programs and modules, such as program instructions/modules corresponding to the method in the embodiment of the present disclosure. The processor executes various functional applications and data processing of the processor by executing non-transient software programs, instructions and modules stored in the memory, that is, the method in the above described method embodiment is realized.

The memory may include a storage program area and a storage data area. The storage program area may store an operating system and an application program required for at least one function, and the storage data area may store data created by the processor and the like. In addition, the memory may include a high-speed random access memory, and may also include a non-transitory memory, such as at least one disk storage device, a flash memory device, or other non-transitory solid-state storage device. In some embodiments, the memory may optionally include memory remotely arranged relative to the processor, which may be connected with the processor through a network. Examples of the above networks include but are not limited to the Internet, an enterprise intranet, a local area network, a mobile communication network, and combinations thereof.

According to an embodiment of the present disclosure, a computer-readable storage medium is further provided. The computer-readable storage medium is configured to store a computer program. When the computer program is executed by a processor, method for controlling multi-screen display of the desktop element described above is realized.

Those skilled in the art may understand that all or a part of the processes in the method of implementing the above embodiments may be completed by instructing relevant hardware through a computer program, which may be stored in a nonvolatile computer readable storage medium. When the computer program is executed, it may include the processes of the embodiments of the above-mentioned methods. Any reference to memory, storage, database or other media provided in the present disclosure and used in the embodiments may include nonvolatile and/or volatile memory. The nonvolatile memory may include read only memory (ROM), programmable ROM (PROM), electrically erasable programmable ROM (EEPROM), or flash memory. The volatile memory may include random access memory (RAM) or external cache memory. By way of illustration and not limitation, RAM is available in various forms, such as static RAM (SRAM), dynamic RAM (DRAM).

It should be understood that each process and/or block in the flowchart and/or block diagram, and the combination of processes and/or blocks in the flowchart and/or block diagram may be implemented by computer program instructions. These computer program instructions may be provided to the processor of a general-purpose computer, a special-purpose computer, an embedded processor, or other programmable data processing apparatus to generate a machine, so that with the instructions executed by the processor of the computer or other programmable data processing apparatus, a device that is used to implement the functions specified in one process or multiple processes in the flowchart and/or one block or multiple blocks in the block diagram is generated.

Multiple embodiments in this description are described in a progressive manner. Different embodiments focus on describing the parts that are different from other embodiments. After reading this description, those skilled in the art can be informed of multiple implementation methods and multiple technical features disclosed in this description, and can make more combinations. To make the description concise, all possible combinations of various technical features in the embodiments have not been described. However, as long as there is no contradiction in the combination of these technical features, they should be considered within the scope of this description.

It should also be noted that the terms "include", "comprise" or any other variants thereof are intended to cover non-exclusive inclusion, so that a process, device, first article or method including a series of elements not only includes those elements, but also includes other elements that are not explicitly listed, or also include elements inherent to such processes, devices, first articles or methods. If there are no more restrictions, the element defined by the sentence "including a..." does not exclude the existence of other identical elements in the process, device, first article or method that includes the element.

The embodiments in this description themselves emphasize the parts that are different from other embodiments, and each embodiment may be compared and explained with each other. Any combination of multiple embodiments in this description by those in the art based on general technical knowledge is covered within the scope of disclosure in this description.

The above is only the embodiment of this invention and is not intended to limit the scope of protection of the claims in this invention. For those in the art, there can be various changes and variations in this invention. Any modifications, equivalent substitutions, improvements, etc. made within the spirit and principles of this invention shall be included within the scope of the claims in this invention.

## Claims

1. A method for controlling multi-screen display, wherein the method is applied to a main display device, the main display device is connected to a secondary display device, the method comprising:
displaying an application management interface, wherein the application management interface includes a window display area and a device display area, the window display area is used to display the application window that has already been executed in the main display device, and the device display area is used to display respective display control of the main display device and the secondary display device,
receiving a drag instruction applied to the window display area, wherein the drag instruction is used to drag a target application window in the window display area to an area where the display control of a device body is located in the device display area, wherein the device body is the main display device or the secondary display device, the target application window is an application window operated by the drag instruction, and
displaying the target application window in the device body in response to the drag instruction.

2. The method of claim 1, wherein the display control comprises a first control corresponding to the main display device and a second control corresponding to the secondary display device, the displaying the target application window in the device body in response to the drag instruction comprises:
when the target application window is dragged to the area where the first control is located, displaying the target application window in the main display device, and
when the target application window is dragged to the area where the second control is located, displaying the target application window in the secondary display device.

3. The method of claim 2, further comprising:
when receiving a trigger instruction for the application window within the window display area, displaying a close button on the application window; and
after receiving a touch operation for the close button, closing the application window in the corresponding device body.

4. The method of claim 3, wherein the main display device displays a program identifier of an application installed in the main display device, and the method further comprises:
receiving a program drag instruction issued for any target program identifier, wherein the program drag instruction is used to drag the target program identifier into the display control of any device body in the device display area, and
in response to the program drag instruction, starting the target application program corresponding to the target program identifier in the main display device, and displaying the application window of the target application program in the device body represented by the program drag instruction.

5. The method of claim 1, wherein after receiving a drag instruction applied to the window display area, the method further comprises:
when the target application window is in a top display state in the device body, setting the display control of the device body to a frozen state.

6. The method of claim 1, wherein the displaying the target application window in the device body in response to the drag instruction comprises:
when the target application window is in a non-top display state in the device body before receiving the drag instruction, displaying the target application window at the top in the device body in response to the drag instruction.

7. The method of claim 1, wherein the main display device displays a touch operation interface for manipulating the secondary display device, the method further comprises:
receiving a touch instruction issued on the touch operation interface, and adjusting the target application window displayed on the secondary display device in response to the touch instruction.

8. The method of claim 1, wherein the main display device displays a control system identifier corresponding to a control system for multi-screen display, the control system for multi-screen display is used to implement a method for controlling multi-screen display, and the displaying the application management interface comprises:
providing a displayer setting interface after receiving a trigger operation on the control system identifier, wherein the displayer setting interface at least includes a screen-mode setting page for the secondary display device, and
displaying the application management interface when at least one secondary display device is set to an extended mode.

9. A main display device, wherein the main display device is connected with a secondary display device, the main display device comprises:
an application-management-interface displaying unit, configured to display the application management interface, wherein the application management interface includes a window display area and a device display area, the window display area is used to display the application window that has already been executed in the main display device, and the device display area is used to display a respective display control of the main display device and the secondary display device,
a drag-instruction receiving unit, configured to receive a drag instruction applied to the window display area, wherein the drag instruction is used to drag a target application window in the window display area to the area where the display control of the device body is located in the device display area, the device body is the main display device or the secondary display device, and the target application window is an application window operated by the drag instruction, and
an application-window displaying unit, configured to display the target application window in the device body in response to the drag instruction.

10. A display device, comprising a processor and a memory for storing a computer program, wherein the computer program, when executed by the processor, performs the method of any one of claims 1-8.

11. A computer-readable storage medium for storing computer programs, wherein the computer program, when executed by a processor, performs the method of any one of claims 1-8.
